# EUROPEAN PATENT APPLICATION

(11) **EP 4 773 097 A1**
(43) Date of publication of application: **08.07.2026**
(21) Application number: 25213868.0
(22) Date of filing: 06.11.2025
(51) Int. Cl.: G06V 10/82, G06V 10/98, G06T 7/00, G03B 43/00

(54) **SCALABLE AND AUTONOMOUS CAMERA TUNING SYSTEM**

(30) Priority: 06.01.2025 US 202519011137
(71) Applicant: Intel Corporation, Santa Clara, CA 95054 (US)
(72) Inventor: Bugdary, Shlomo, 7535159 Rishon Le Zion (IL); Nasser, Jamil, 3537908 Haifa (IL); Krishnamurthy, Lakshman, Portland OR, 97229 (US); Cohen, Uzi, 4906902 Petah-Tikva (IL); Levy, Noam, Sunnyvale CA, 94087 (US); Zatzarinni, Rony, 6382619 Tel Aviv (IL); Barber, Dor, 4632821 Herzliya (IL); Horovitz, Dan, 7578229 Rishon LeZion (IL); Sagi, Tamir, 3440328 Haifa (IL)
(74) Representative: Samson & Partner Patentanwälte mbB

(57) **Abstract**

Camera tuning process is a time consuming and labor-intensive process. To address this issue, camera tuning system including a multi-modal large language model and a retrieval-augmented generation system can be implemented to intelligently and efficiently handle a camera tuning task in real-time. The multi-modal large language model can evaluate image quality and can be finetuned using high-quality labeled data and synthetically generated labeled data. The retrieval-augmented generation system can incorporate camera configuration knowledge into a vector database and can leverage a retrieved context to generate a configuration solution that addresses image quality issues identified by the multi-modal large language model. The resulting camera tuning system is a unified process that can identify image quality issues and provide configuration solutions that address both technical and aesthetic image quality concerns.

## Description

### Background

Cameras are optical systems that capture and record light to create images. A camera can include components such as lenses, sensors, and processing units that process the signals captured by the sensors. Cameras often face image quality issues or artifacts that impact user experience and product value.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates a laborious and time consuming camera tuning process, according to some embodiments of the disclosure.
FIG. 2 illustrates a camera tuning system involving a two-stage process, according to some embodiments of the disclosure.
FIG. 3 illustrates implementing an analysis stage of the two-stage process, according to some embodiments of the disclosure.
FIG. 4 illustrates implementing a solution producing stage of the two-stage process, according to some embodiments of the disclosure.
FIG. 5 is a flowchart showing a method for tuning a camera, according to some embodiments of the disclosure.
FIG. 6 illustrates an exemplary implementation of a single modality large language model, according to some embodiments of the disclosure.
FIG. 7 illustrates an exemplary implementation of a multi-modal large language model, according to some embodiments of the disclosure.
FIG. 8 is a block diagram of an exemplary computing device, according to some embodiments of the disclosure.

### Detailed Description

### Overview

A camera system can include a lens, a sensor, and an image processing unit that processes the signals captured by the sensor. The sensor may capture a raw image, and the image processing unit may receive the raw image and produce a processed image, such as a YUV image or RGB image. A camera system can be tuned to alleviate image quality issues or reduce image quality artifacts in the processed image. Image quality issues can include inaccurate color reproduction causing unnatural skin tones, limited dynamic range that affects details in shadows or highlights, excessive noise in low light, and incorrect focus resulting in blurriness. Image quality artifacts can include over sharpness, wrong white balance, saturation clipping, noisy image, wrong lens shading correction, motion blur, etc.

Camera tuning can involve determining and changing the available settings of the camera system. Modern cameras can be complex and can include many different types of settings. Available camera settings can include physical parameters (e.g., exposure time, aperture, focus, etc.), sensor configurations (e.g., gain, pixel clock, binning modes, etc.), image processing algorithms and/or post-processing algorithms configurations (e.g., denoising parameters, sharpening parameters, tone mapping parameters, gamma correction parameters, color balance parameters). These settings can be controlled through hardware registers, camera software development kits, and/or user interfaces, with their configuration significantly impacting image quality, noise levels, dynamic range, and color accuracy.

Camera tuning may be used to address subjective aesthetic preferences (or goals) and/or variety of image quality standards of original equipment manufacturers (OEMs) of camera systems. Examples of subjective aesthetic preferences may include specific skin tone reproduction, with some preferring vivid and reddish tones and others opting for subtler, yellowish hues.

The diversity and complexity of image quality concerns and goals can often lead to image quality engineers and image processing engineers designing customized camera configuration solutions to address the concerns and meet various goals. For this reason, a universal "one-size-fits-all" camera configuration solution does not exist.

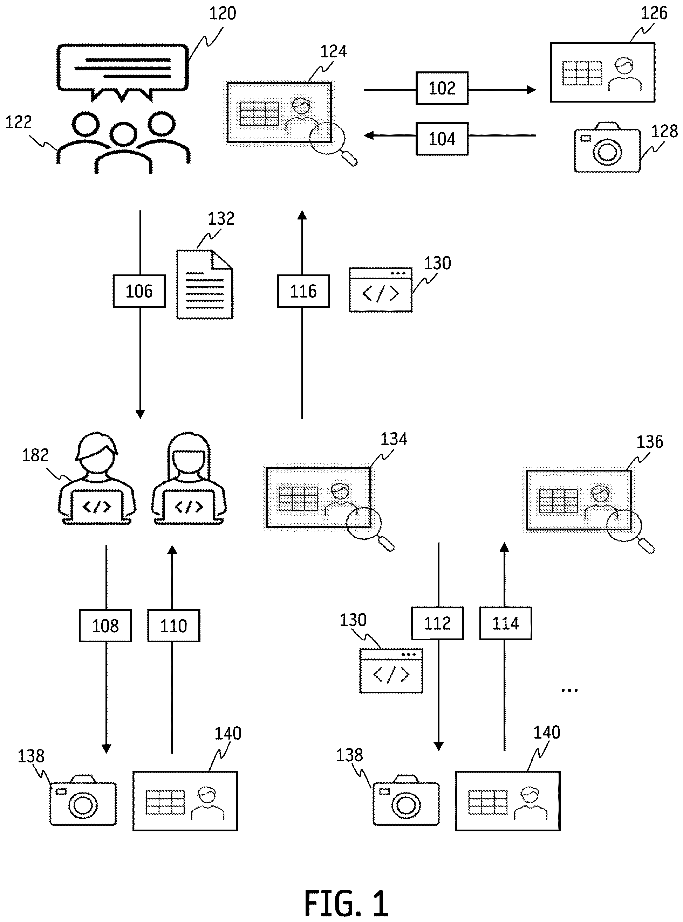

The camera tuning process to resolve image quality issues and meet OEM preferences/goals can be a manual, laborious process that consumes significant time and resources. FIG. 1 illustrates why the camera tuning process can be a resource-intensive, time consuming, and labor-intensive process. OEMs 122 can have image quality standards and/or subjective aesthetic preferences 120. In 102, OEMs 122 can use camera 128 to capture test scene 126. In 104, captured image 124 is obtained and evaluated by OEMs 122. In 106, OEMs 122 can report problems 132 (e.g., one or more image quality issues) upon evaluating captured image 124 to image quality engineers 182. In 108, image quality engineers 182 can attempt to replicate problems 132 in a lab setting and use camera 138 to capture test scene 140 that mimics test scene 126. In 110, captured image 134 of the test scene 140 is obtained and evaluated by image quality engineers 182. Replicating problems 132 reported by OEMs 122 can be a complex task due to varying conditions and subjects in the test scene. In 112, image quality engineers 182 may meticulously adjust camera settings 130 (e.g., white balance, exposure, color profiles, algorithm configurations, etc.) used by camera 138 to capture test scene 140. In 114, captured image 136 of test scene 140 is obtained. Image quality engineers 182 can evaluate captured image 136 to determine whether camera settings 130 address problems 132. The process of finetuning camera settings 130 (involving 112 and 114) can be repeated for test scene 140 until image quality engineers 182 determines that camera settings 130 address problems 132. In addition, image quality engineers 182 may repeat the process of finetuning across a wide range of other test scenes besides test scene 140 to ensure that camera settings 130 do not adversely affect image quality in other settings. Once camera settings 130 are validated and tested, in 116, camera settings 130 are sent back to OEMs 122 for approval.

The camera tuning process illustrated in FIG. 1 can take up to 10 weeks and occupies a significant amount of workload of image quality engineers 182. The camera tuning process can be especially challenging for 3A issues, e.g., Auto Exposure, Auto Focus, and Auto White Balance, because of the dynamic nature of the algorithms controlling the image capture process and the feedback loop the algorithms create. Also, the camera tuning process can be challenging because of the complexity and difficulty in replicating the exact conditions under which the image quality issue was initially observed by OEMs 122. The camera tuning process is a manual process and can be costly. The process cannot quickly and easily scale and deploy tailored camera configuration solutions across many types of camera systems.

To address this issue, camera tuning system including a multi-modal large language model (LLM) and a retrieval-augmented generation (RAG) system can be implemented to intelligently and efficiently handle a camera tuning task in real-time. The camera tuning system implements a two-stage camera tuning process. A first stage of the two-stage process is an analysis stage. A second stage of the two-stage process is a solution producing stage. The resulting camera tuning system is a unified process that can identify image quality issues and provide configuration solutions that address both technical and aesthetic image quality concerns.

In the first stage, a multi-modal LLM is implemented to autonomously evaluate image quality, compare images, identify artifacts, and provide insights into various kinds of image distortions. An engineered prompt having an image and a task to determine an image quality issue present in the image can be generated and input into the multi-modal LLM to obtain a response including an identified image quality issue. The multi-modal LLM can be finetuned using high-quality labeled data, including synthetically generated labeled data. The synthetically generated labeled data can be produced with little to no human labor to enhance the finetuning of the multi-modal LLM. Moreover, applying a multi-modal LLM to the image quality analysis task means that the task is no longer prone to human errors and biases. This approach is a significant departure from manual assessment methods. Using the multi-modal LLM can allow for a scalable and rapid response to image quality issues while addressing OEM feedback and adapting to their aesthetic preferences in real-time.

In the second stage, a RAG system is implemented to autonomously produce tailored camera configuration solutions. After gaining deep insights into image quality issues in the first stage, an LLM in the RAG system can autonomously produce camera configuration solutions that rectify detected artifacts and/or to align the camera output with OEMs' reference target images. The RAG system can incorporate camera configuration knowledge into a vector database and leverage a retrieved context to generate a configuration solution that addresses image quality issues identified by the multi-modal LLM. Specifically, the RAG system can retrieve context using the identified image quality issue from the first stage. Based on the identified image quality issue in the response from the first stage, a query can be formatted and converted into a query embedding. Using the query embedding, the context can be retrieved from the vector database having embeddings of camera configuration knowledge. In particular, the vector database has embeddings generated for chunks of the camera configuration knowledge. One or more embeddings that are closest to the query embedding can be retrieved, and one or more chunks of camera configuration knowledge corresponding to the one or more embeddings can be used as the retrieved context. The retrieved context can include, e.g., camera settings and/or parameters, that are relevant for the identified image quality issue. The retrieved context can include camera configuration knowledge that are relevant to the query.. A further engineered prompt can be generated, where the further engineered prompt can include the query, the retrieved context, and a further task to determine a camera configuration solution. The further engineered prompt can be input into a further LLM to obtain a further response that includes a specified camera configuration solution that addresses the identified image quality issue from the first stage. By incorporating camera configuration knowledge (e.g., camera processing unit specifications and/or manuals) into the RAG system, the further LLM can leverage the retrieved context having relevant parameters and settings to autonomously generate tailored camera configuration solutions that can address image quality issues.

The two-stage camera tuning process bridges the gap between the OEM's targets and production of a camera configuration solution. In the first stage, the multi-modal LLM is finetuned to make expert level image quality assessments using high-quality labeled data. In the second stage, a further LLM is fed with relevant embeddings of camera configuration knowledge to allow the further LLM to produce tailored camera configuration solutions. The result is a holistic camera tuning system that is designed to autonomously identify and correct image quality issues, as well as to adapt to the subjective aesthetic preferences/goals of different OEMs in real-time. By integrating image analysis, real-time feedback, and continuous learning, the camera tuning system can efficiently achieve enhanced image quality tailored to specific requirements without extensive manual intervention of expert image quality engineers and expert image processing engineers. The holistic camera tuning system offers a unified solution for image quality assessment and camera reconfiguration and streamlines the camera tuning process.

According to one aspect, the overall camera tuning system offers real-time OEM customization and image quality issue identification and resolution. The multi-modal LLM effectively adapts to OEM aesthetic preferences and addresses image quality issues in real-time. This approach bypasses the ambiguous and laborious process of replicating OEM testing environments as illustrated in FIG. 1. Using the streamlined camera tuning process can reduce the time and resources required to achieve optimal image quality. The process can scale easily to support varying and changing OEMs demands with minimal efforts. The overall system offers real-time image quality problem solving for OEMs and end users of the camera system. The system's capability to function autonomously, without human intervention, enables the system to provide solutions in real-time in an on-the-fly solution within the camera system. As a result, the system can be used in offline and online camera tuning scenarios. In an online camera tuning scenario, the system can actively adjust the camera settings as the OEM or an end-user captures images by detecting and resolving image quality issues instantaneously.

According to one aspect, the RAG system in the second stage of the process can be extended to any camera by accessing and including appropriate manuals, documentation, and knowledge data into the vector database. As a result, the further LLM in the RAG system can produce informed and tailored camera reconfiguration solutions universally for any camera and can be updated easily by including new camera configuration knowledge into the vector database.

According to one aspect, OEM and/or end-user feedback of image quality issues can be collected and used as training data to finetune the multi-modal LLM over time, which means that the multi-modal LLM can continuously learn and improve based on new labeled data to refine and enhance the multi-modal LLM's capabilities for image quality assessment.

According to one aspect, the flexibility of the multi-modal LLM to process different types of inputs allows the camera tuning system to adapt to a wide range and changing of preferences and reference targets and handle test images captured across different environmental conditions. The resulting system is scalable and adaptable.

Some advantages of the improved camera tuning system can include reducing burnout and workload on image quality engineers, expediting camera system optimization, and offering a scalable system that can adapt or tailor to OEMs' specific preferences/goals and a variety of cameras. The camera tuning system effectively combines the tasks of identifying image quality issues, generating tailored solutions to specific cameras, and addressing technical and subjective aesthetic preferences/goals in a unified, autonomous system. In some cases, the camera tuning system can be less prone to human-related errors, oversights, biases, or mistakes, when trained machine learning models are identifying image quality issues and generating configuration solutions. The camera tuning system can lead to consistently better camera image quality tuning results, faster time-to-market for camera systems, more robust to human error and biases, and potentially a more personalized camera experience for end users. The reduction in manual labor and iterative testing relative to the camera tuning process illustrated in FIG. 1 can result in substantial cost savings and improved satisfaction from OEMs and end users.

In one experiment, the camera tuning system was used to produce a camera configuration solution of the sharpening block implemented in a processing unit of a camera system. A query identifying an image quality issue (e.g., over-sharped) is used in the RAG system, which has access to documentation and tuning tools of the camera system. Documentation and specifications (e.g., including parameters list) were converted into embeddings in a vector database, and the RAG system retrieved ten (10) best matches as a retrieved context for the query. A prompt is generated using the query and the retrieved context, and in response, the LLM in the RAG system responded by producing a detailed sequence of operations, pinpointing the camera parameters that are to be adjusted to address the image quality issue. This experiment underscored the camera tuning system's ability to autonomously develop a reconfiguration strategy, effectively addressing the identified image quality issues without significant human intervention.

While many embodiments herein are described with respect to camera tuning, it is envisioned by the disclosure that the teachings can be extended to tuning of other sensor systems, such as depth sensor systems, range sensing systems, infrared sensing systems, etc.

### Related work

FIG. 1 illustrated a less-than-ideal camera tuning process involving manual tuning and calibration by image quality engineers and image processing engineers, use of standardized test charts, and software tools for image analysis. The process is labor-intensive, prone to human error, and struggles to scale with the diverse aesthetic preferences of OEMs.

In some solutions, neural network deep learning methods are used to predict quality scores, but do not use LLMs. These methods are limited by dataset scope, real-world complexity, and struggle to adapt to diverse OEM aesthetic preferences. In addition, these methods do not address the Image Quality Enhancement task.

In some solutions, an off-the-shelf multi-modal LLM can offer some form quality comparisons but lacks the expert and nuanced understanding for accurate image quality evaluation in real-world tasks. The off-the-shelf multi-modal LLM often do not provide correct image quality assessments. Moreover, techniques such as few-shot learning and prompt engineering have not consistently improved their performance in the image quality evaluation domain. In addition, off-the-shelf LLMs do not possess specific camera configuration knowledge about the specific camera and, therefore, cannot generate camera configuration solutions to address image quality issues.

Various embodiments described herein relating to a scalable and autonomous camera tuning system differ from these solutions. The camera tuning system offers a unified solution that autonomously adjusts camera settings in real-time and can translate image quality understanding into actionable configuration files. The camera tuning system can provide a comprehensive approach to image quality engineering tasks, offering a complete end-to-end system for enhancing image quality in camera systems.

### Scalable and autonomous camera tuning system

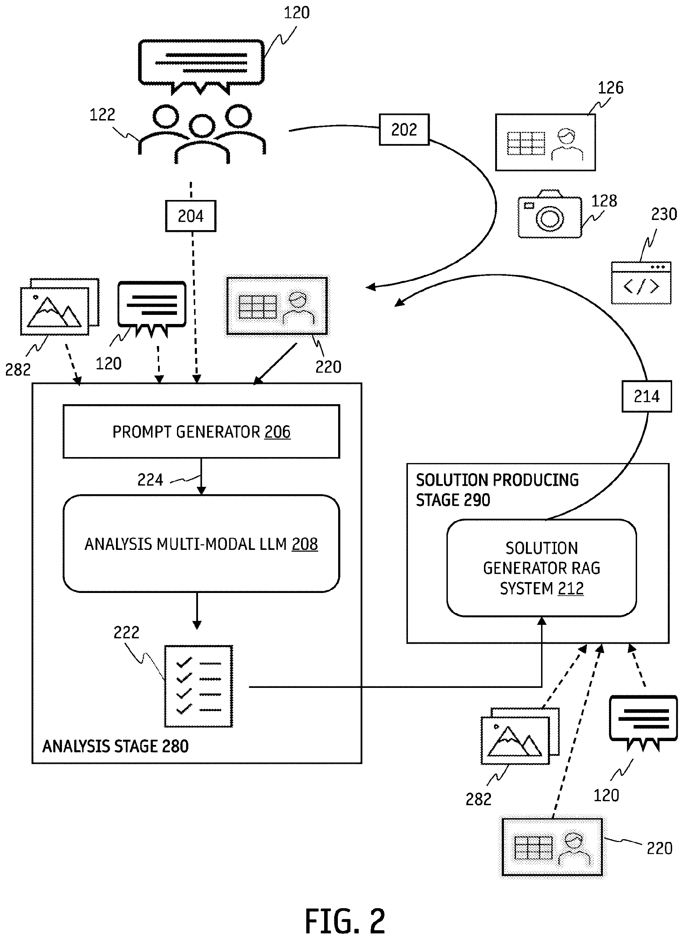

The camera tuning system integrates LLM technology with advanced analysis, reasoning, and generation capabilities, such as a multi-modal LLM and a RAG system, to assess image quality issues and generate optimized camera configuration solutions. FIG. 2 illustrates a camera tuning system involving a two-stage process, according to some embodiments of the disclosure. The system operates in two stages or phases: analysis stage 280 and solution producing stage 290.

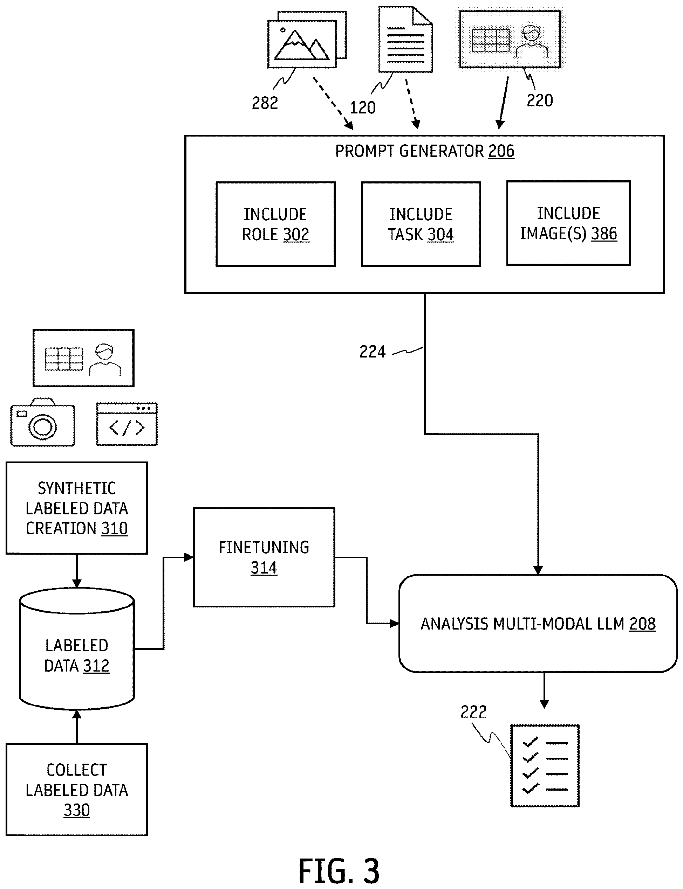

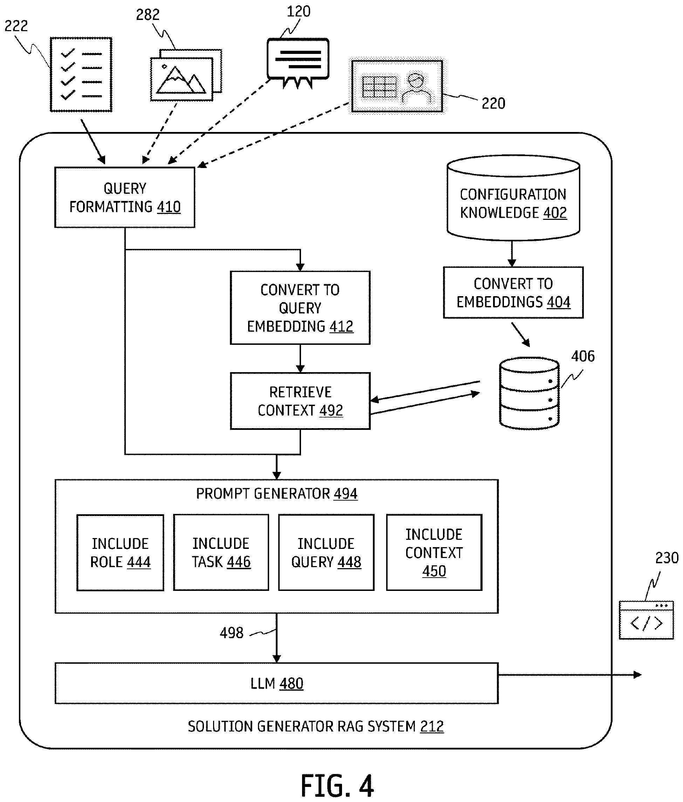

Analysis stage 280 may include prompt generator 206 and analysis multi-modal LLM 208. A detailed illustration of analysis stage 280 is shown in FIG. 3. Solution producing stage 290 may include solution generator RAG system 212. A detailed illustration of solution producing stage 290 is shown in FIG. 4.

In 202, OEMs 122 (or end users) may capture test scene 126 using camera 128 and produce captured image 220. Captured image 220 may be provided as input to analysis stage 280 (in the form of visual input). One or more additional captured images may be provided as input to analysis stage 280.

As discussed previously, OEMs 122 may have one or more subjective aesthetic preferences 120. In 204, OEMs 122 may optionally provide subjective aesthetic preferences 120 as an input to analysis stage 280 (in the form of textual input). Subjective aesthetic preferences 120 may include one or more of: an aesthetic preference (or goal) and an image quality standard. In some cases, subjective aesthetic preferences 120 may include one or more reference target images 282. In 204, OEMs 122 may optionally provide one or more reference target images 282 as an input to analysis stage 280 (in the form of visual input).

In some cases, OEMs 122 may evaluate captured image 220 and offer one or more feedback comments about captured image 220. In 204, OEMs 122 may optionally provide the one or more feedback comments about captured image 220 as an input to analysis stage 280 (in the form of textual input). In some cases, OEMs 122 may describe captured image 220 (e.g., about the environmental conditions under which captured image 220 is captured or one or more characteristics of one or more subjects in captured image 220) and offer information about captured image 220. In 204, OEMs 122 may optionally provide the information about captured image 220 as an input to analysis stage 280 (in the form of textual input).

Prompt generator 206 may receive one or more inputs of potentially different modalities and generate prompt 224. Prompt 224 may be input into analysis multi-modal LLM 208. Analysis multi-modal LLM 208 may generate response 222 in response to receiving and processing prompt 224. Response 222 can include one or more identified image quality issues.

Analysis multi-modal LLM 208 may receive one or more captured images (e.g., captured image 220) as part of prompt 224 and be instructed in prompt 224 to evaluate the one or more captured images against a set of quality metrics and/or aesthetic targets. This evaluation can consider image quality issues such as common image artifacts, color accuracy, exposure levels, and other technical parameters that contribute to the perceived quality of an image.

Analysis multi-modal LLM 208 may in some cases receive OEM-specific aesthetic preferences (e.g., subjective aesthetic preferences 120 and/or one or more reference target images 282) as part of prompt 224 and take the preferences into account when evaluating the one or more captured images. Subjective aesthetic preferences 120 can be communicated as text that articulates the OEM's targets/goals. One or more reference target images 282 communicates visually the OEM's preferences and exemplify desired image quality outcomes.

Analysis multi-modal LLM 208 may in some cases receive feedback comments from OEMs 122 about one or more captured images as part of prompt 224 and take the feedback comments into account when evaluating the one or more captured images. The feedback comments can be communicated as text that articulates specific image quality concerns that OEMs 122 has about the one or more captured images.

Once analysis multi-modal LLM 208 has identified one or more image quality issues in response 222 (e.g., areas for improvement), the camera tuning system transitions solution producing stage 290. Solution producing stage 290 implements solution generator RAG system 212 to intelligently propose camera configuration solutions that can address the identified image quality issues. Response 222 having one or more identified image quality issues can be formatted into a query for solution generator RAG system 212. The query can be converted by solution generator RAG system 212 into a query embedding.

Solution generator RAG system 212 can access a comprehensive camera configuration knowledge base having, e.g., camera parameters, their effects on image quality, and documented solutions to common image quality issues. The camera configuration knowledge is chunked and converted into embeddings and stored in a vector database. A context for the query can be retrieved by solution generator RAG system 212 from the vector database using the query embedding. The query (having the one or more image quality issues) and the retrieved context can be combined to form a prompt which can be used to prompt an LLM in solution generator RAG system 212 to formulate a response having camera configuration solution 230 that addresses the identified image quality issues and is aligned with the subjective aesthetic preferences 120 of OEMs 122.

In 214, solution generator RAG system 212 can provide camera configuration solution 230 to OEMs 122 or directly to camera 128, to reconfigure camera 128 to address the one or more identified image quality issues in response 222 and potentially the subjective aesthetic preferences 120 of OEMs 122.

In some cases, analysis multi-modal LLM 208 may generate response 222 in the form of a query that can be used in solution generator RAG system 212. In such cases, the query may not need to be formatted by solution generator RAG system 212.

In some cases, solution generator RAG system 212 may receive one or more additional inputs besides response 222, to assist solution generator RAG system 212 in retrieving context and/or generating a prompt that can lead to a better camera configuration solution 230. The one or more additional inputs to solution generator RAG system 212 may include one or more of: captured image 220, one or more feedback comments on captured image 220, subjective aesthetic preferences 120, one or more reference target images 282, information about camera 128, and information about captured image 220.

FIG. 3 illustrates implementing an analysis stage of the two-stage process, according to some embodiments of the disclosure. Prompt generator 206 may generate prompt 224. Prompt generator 206 may include one or more parts: include role 302, include task 304, and include image(s) 386, which may include or insert content into prompt 224. Prompt generator 206 may utilize a prompt template that includes pre-defined content. Prompt 224 may be input into analysis multi-modal LLM 208 to produce response 222. Prompt 224 may be input into a multi-modal LLM, such as analysis multi-modal LLM 208, to obtain response 222 having one or more identified image quality issues.

Include image(s) 386 may include an image, such as captured image 220 in prompt 224. In some cases, include image(s) 386 may include one or more reference target images 282 in prompt 224.

Include task 304 may include a task in prompt 224. The task may specify or instruct analysis multi-modal LLM 208 to determine an image quality issue present in the image (e.g., in captured image 220). In some embodiments, the task may include one or more types of possible image quality issues. In some embodiments, the task may include one or more characteristics of possible image quality issues. Examples of possible image quality issues can include a lighting condition, exposure, color balance, tone mapping, sharpness, and image noise. In cases where one or more reference target images 282 is included in prompt 224, the task can include an instruction to compare a captured image and the one or more reference target images 282. In some embodiments, the task can include an instruction to compare multiple captured images and optionally the one or more reference target images 282. In some embodiments, the task can include an instruction to compare multiple captured images. In some embodiments, the task can include one or more of: an aesthetic preference and an image quality standard, e.g., preferences/goals associated with the OEM or an end-user of the camera system. In some embodiments, the task can include subjective aesthetic preferences 120.

Include role 302 may include a role of analysis multi-modal LLM 208 specifying that analysis multi-modal LLM 208 is an expert image quality engineer.

It is not trivial to implement analysis multi-modal LLM 208. Various experiments conducted with off-the-shelf multi-modal LLMs revealed that the off-the-shelf multi-modal LLMs can struggle to produce a response that accurately identifies image quality issues. It is not a surprise since off-the-shelf multi-modal LLMs are trained to perform generic image understanding tasks and may not have an understanding of nuanced image quality issues at an expert level. To make sure that analysis multi-modal LLM 208 is robust and can accurately extract image quality issues, finetuning 314 and labeled data 312 are included to train and finetune a multi-modal LLM to be used as analysis multi-modal LLM 208.

In some embodiments, finetuning 314 may involve updating analysis multi-modal LLM 208's weights (or parameters) using labeled data 312 to optimize analysis multi-modal LLM 208 to be able to expertly extract image quality issues.

One exemplary approach that can be implemented by finetuning 314 is Low-Rank Adaptation (LoRA). LoRA can add small trainable rank decomposition matrices to existing weight matrices of a generic multi-modal LLM instead of modifying all parameters of the generic multi-modal LLM. For example, in a transformer's attention layers, LoRA can decompose a large weight matrix W into W + BA where B and A are much smaller matrices. This reduces memory usage and training time while still allowing meaningful adaptation of the generic multi-modal LLM's behavior. During training, only the LoRA parameters (A and B matrices) are updated while the original weights of the multi-modal LLM remain frozen. During training, the multi-modal LLM along with the low-rank decomposition matrices processes batches of training examples from labeled data 312 and the LoRA parameters are updated using gradient descent. For each example from labeled data 312, the multi-modal LLM along with the low-rank decomposition matrices can make a prediction using current parameters, calculate loss by comparing prediction to true label of the example, compute gradients of loss with respect to the LoRA parameters using backpropagation, and update the LoRA parameters in direction that reduces loss. The training process can be repeated for batches of examples from labeled data 312 until convergence on optimal LoRA parameters.

Labeled data 312 can include a comprehensive and diverse finetuning dataset that was developed to enhance the analysis multi-modal LLM 208's image quality issue extraction capabilities.

In some cases, labeled data 312 includes synthetically created labeled data, which may be generated by synthetic labeled data creation 310. Synthetic labeled data creation 310 can artificially induce image artifacts and distortions by configuring a camera with known camera configurations/settings that are harmful for image quality. Synthetic labeled data creation 310 can artificially induce image artifacts and distortions by distorting a captured image through post-processing (e.g., introducing incorrect white balance gains, adding lens shading, etc.). The images along with one or more corresponding image quality issues as labels can be generated by synthetic labeled data creation 310 and stored in labeled data 312. The images without the one or more induced image quality issues can be stored in labeled data 312 in some cases.

In some cases, labeled data 312 includes collected labeled data, which may be collected by collect labeled data 330. Collect labeled data 330 may collect historical image quality issue reports, such as past captured images and reports from OEMs that detail specific image quality issues in the past captured images and store the historical image quality issue reports in labeled data 312. Collect labeled data 330 may collect image quality engineer or image processing engineer expert evaluations of captured images and store the captured images and the expert evaluations in labeled data 312. Including the expert evaluations in labeled data 312 can leverage the qualitative insights and annotations from experienced engineers as high-quality labeled data, providing high-quality training data in labeled data 312. Collect labeled data 330 may collect images captured with and/or without camera configuration solutions that were previously manually crafted or autonomously generated to address one or more image quality issues and store the images and corresponding image quality issues in labeled data 312. Collect labeled data 330 may collect image assessments from internal data sources and include the image assessments in labeled data 312. Including sourced image assessments in labeled data 312 can diversify the training dataset in labeled data 312. In one example, internal data sources offered 8,600 paired data samples from an internal camera expert reviews database, and 450 data samples are selected and stored in labeled data 312. Collect labeled data 330 may collect comparative images including side-by-side image comparisons of cameras or the same camera under different configurations/settings and annotated with one or more image quality issues and store the comparative images in labeled data 312. Collect labeled data 330 may collect open-source image quality training datasets and store the open-source image quality training datasets in labeled data 312.

In one example, when a prompt having three images and a task to compare the images is input into analysis multi-modal LLM 208, analysis multi-modal LLM 208 generated the following response:

| |
|---|
| First Image (Left) |
| • Lighting Conditions: The lighting is somewhat soft and diffuse, which gives a less contrasted look. |
| • Exposure: The exposure appears slightly underexposed with darker overall toning. |
| • Color Balance and Accuracy: The colors appear a bit muted and less vibrant. The lack of highlights makes the feathers appear less defined. |
| • Tone Mapping: The tone mapping is not aggressive, resulting in a flatter appearance. |
| • Sharpness: The sharpness is lower, making details in the feathers and the bird's overall texture less defined. |
| • Noise Performance: It has noticeable noise, particularly in the background, which suggests poor noise management. Second Image (Center) |
| • Lighting Conditions: The lighting seems similar to the first image but with slightly better definition. |
| • Exposure: The image is better exposed, with a balance of lights and shadows, but still soft overall. |
| • Color Balance and Accuracy: The colors are more accurate than the first image, with better saturation and contrast, but still on the muted side. |
| • Tone Mapping: The tone mapping is still conservative but provides a bit more contrast and definition than the first image. |
| • Sharpness: The sharpness has improved, making the details in the feathers more apparent. |
| • Noise Performance: Noise is less pronounced than in the first image, but still present, particularly in the background. |
| Third Image (Right) |
| • Lighting Conditions: The lighting in this image is the best out of the three, with better contrast and clarity. |
| • Exposure: The exposure is optimal, capturing detail in both the shadows and highlights. |
| • Color Balance and Accuracy: The color balance is excellent, showing the natural hues of the bird with vibrant yet accurate tone. |
| • Tone Mapping: The tone mapping is well-executed, providing good contrast that brings out the depth in the feathers. |
| • Sharpness: There is significant sharpness, ensuring clear and crisp details of the bird's feathers and features. |
| • Noise Performance: The noise performance is the best out of the three images, with minimal noise visible, especially in the background. |
| Comparison Summary |
| • Lighting Conditions and Exposure: The lighting improves progressively from the first to the third image, with the third image having the best lighting conditions and exposure. |
| • Color Balance and Accuracy: The color accuracy and balance also show a similar trend, with the third image having the most accurate and vibrant colors. |
| • Tone Mapping: Tone mapping is minimal in the first image, slightly better in the second, and the best in the third, which has the most depth and contrast. |
| • Sharpness and Noise Performance: Sharpness and noise performance significantly improve from the first to the third image, with the third image being the sharpest and having the least noise. Overall, the third image is of the highest quality among the three, followed by the second, and then the first. |

FIG. 4 illustrates implementing a solution producing stage of the two-stage process, according to some embodiments of the disclosure. The solution producing stage integrates RAG technology. In particular, FIG. 4 illustrates one exemplary implementation of solution generator RAG system 212 having RAG technology.

RAG technology enhances LLMs by combining the models with a knowledge retrieval system. Knowledge can first be chunked into smaller segments (e.g., using techniques like sliding windows or semantic splitting). The chunks can be converted into dense vector embeddings using a transformer-based model or an LLM. The embeddings can be stored a vector database for efficient similarity search. Vector databases use high-dimensional vector spaces to store embeddings, where each document or item is represented as a numerical vector. When performing similarity searches, vector databases can use specialized indexing structures to avoid comparing the query embedding against every stored embedding. These indexes create a graph-like structure where similar vectors are connected, allowing the search to traverse quickly to the most relevant candidates. The database then uses distance metrics like cosine similarity to rank the closest matches, and can return the top-k embeddings.

Referring more specifically to FIG. 4, solution generator RAG system 212 can leverage a wealth of camera-specific configuration knowledge (illustrated as configuration knowledge 402) to generate camera configuration solution 230. Configuration knowledge 402 can include one or more of: parameter names, their respective value ranges, camera parameter functionalities, detailed image processing algorithm specifications, methods used by image quality tools, prior image quality issues and corresponding solutions, user manuals, code for image quality tools, registers descriptions for cameras, camera system calibration tool specifications, reference target images, prior captured images and corresponding solutions, comparative images illustrating one or more image quality issues and configuration settings that caused the issues, etc. In some embodiments, configuration knowledge 402 includes a camera parameter name, a camera parameter value range of the camera parameter name, a camera functionality, an image processing algorithm specification, an image quality tool method, a camera manual, a register configuration, and firmware configuration code.

Configuration knowledge 402 is encoded as embeddings by convert to embeddings 404 and the embeddings can be stored in vector database 406. Convert to embeddings 404 can convert the chunks of configuration knowledge 402 into embeddings using a transformer-based model or LLM. Embeddings is a retrievable format that solution generator RAG system 212 can access and apply to its configuration solution generation process. Specifically, a number of most prominent or relevant embeddings and pieces or chunks of knowledge/information that correspond to the embeddings can be retrieved from vector database 406. The pieces or chunks of knowledge/information can be used as context, and the retrieved context can be used by LLM 480 to produce accurate and effective camera configuration solutions.

A query, e.g., such as a question, can be submitted to a RAG system to initiate the knowledge retrieval process and be used to retrieve the most prominent or relevant embeddings from vector database 406. The pieces of information corresponding to the most prominent or relevant embeddings can be used as context. In the example of FIG. 4, the query may be based on the one or more identified image quality issues in response 222. Query formatting 410 may format a query based on the one or more identified image quality issues in response 222. Query formatting 410 may rephrase the identified image quality issue in response 222 into a question. In some cases, one or more additional information may be appended or added to the query by query formatting 410. The one or more additional information may include one or more of an aesthetic preference, an image quality standard, and subjective aesthetic preferences 120. The one or more additional information may include one or more of: one or more reference target images 282 and captured image 220. The one or more additional information may include one or more of: information about a camera and information about captured image 220.

Convert to query embedding 412 may convert the query produced in query formatting 410 into a query embedding. Convert to query embedding 412 may utilize (the same or different) transformer-based model or LLM that was used to generate the embeddings in vector database 406. Convert to query embedding 412 converts the query to the same embeddings space or vector space as the embeddings in vector database 406.

Using the query embedding, retrieve context 492 can retrieve a context from vector database 406. Retrieve context 492 can perform similarity search using the query embedding. Similarity can be measured using cosine similarity or dot-product. Retrieve context 492 may retrieve a number of embeddings of configuration knowledge 402 that match most closely to the query embedding. Top-k most relevant chunks corresponding the top-k embeddings that are the closest or most similar to the query embedding (e.g., having the top-k highest similarity scores) are retrieved by retrieve context 492. The retrieved context can include the top-k most relevant chunks of configuration knowledge 402. Optionally, filtering and/or reranking may be performed by retrieve context 492 when producing the context.

Prompt generator 494 may receive the query generated or produced by query formatting 410 and the retrieved context obtained by retrieve context 492, and generate further prompt 498 having the query, the context, and a further task. The further task may specify or instruct LLM 480 to determine a configuration solution. Further prompt 498 may be input into LLM 480 to obtain a further response having a specified configuration solution that addresses the one or more identified image quality issue in response 222.

Prompt generator 494 may include one or more parts: include role 444, include task 446, include query 448, and include context 450, which may include or insert content into further prompt 498. Prompt generator 494 may utilize a prompt template that includes pre-defined content. Further prompt 498 may be input into LLM 480 to produce a further response having camera configuration solution 230.

Include role 444 may include a role of LLM 480 specifying that LLM 480 is an expert image processing engineer.

Include query 448 may include the query generated by query formatting 410 in further prompt 498.

Include context 450 may include the retrieved context fetched by retrieve context 492 in further prompt 498.

Include task 304 may include a further task in further prompt 498. The further task may specify or instruct LLM 480 to determine a camera configuration solution. In some embodiments, the further task includes an instruction to determine the configuration solution for a specific block in an image processing pipeline (e.g., a filtering block, an image processing block, a post-processing block, etc.). In some embodiments, the further task includes an instruction to output the configuration solution in a form of one or more operations. In some embodiments, the further task includes an instruction to output the configuration solution in a form of one or more register values and one or more register addresses to write the one or more register values. In some embodiments, further task includes an instruction to output the configuration solution in a form of one or more application programming interface function calls or code having the one or more application programming interface function calls.

Using further prompt 498, which has been enriched with the retrieved context, LLM 480 can synthesize a camera configuration solution that can address the one or more identified image quality issues in response 222. The retrieved context in further prompt 498 can ground the responses being generated by LLM 480 within configuration knowledge 402 while maintaining LLM 480's ability to reason and synthesize a camera configuration solution in the expert image quality analysis domain. Moreover, vector database 406 can be updated with real-time knowledge updates and new camera configuration knowledge without having to retraining or finetune LLM 480.

In one example, LLM 480 produced a further response as follows:

| |
|---|
| To reconfigure the CAS (Contrast Adaptive Sharpening) algorithm to handle an over sharpened image, you can adjust the parameters related to overshoot and undershoot limits. Here are the steps you can follow: |
| 1. Set the os_us_delta_compression_threshold parameter: |
| o This parameter controls the overshoot/undershoot delta that will be compressed. Lowering this value will reduce the overshoot and undershoot, effectively reducing the oversharpening. The range is from 0 to 511, with 0 allowing no overshoot/undershoot and 511 allowing maximum clipping. The default value is 124. |
| 2. Adjust Overshoot/undershoot limit sliders: |
| o These sliders control the amount of overshoot and undershoot allowed in the edges areas. Setting these sliders to a lower value will reduce the oversharpening effect: |
| ■ Set the sliders closer to 0 to not allow any overshoot/undershoot in edges areas. |
| • Set the sliders to 1 to not limit overshoot/undershoot. |
| 3. Edge sensitivity adjustments: |
| o You can also adjust the Edge sensitivity slider to treat more areas as texture rather than edges. This will limit the sharpening in those areas: |
| • Set the slider closer to [0,0] to treat more areas as texture. |
| ■ Set the slider closer to [1, 1] to treat more areas as edges. Here's a step by step guide: |
| 1. Modify os_us_delta_compression_threshold parameter: |
| o Lower the value from the default 124 towards 0 to reduce overshoot/undershoot. |
| 2. Adjust the Overshoot/undershoot limit sliders: |
| ∘ Set the Overshoot slider closer to 0. |
| ∘ Set the Undershoot slider closer to 0. |
| 3. Finetune the Edge sensitivity slider: |
| o Adjust the Edge sensitivity slider closer to [0,0] to ensure more areas are treated as texture. |
| By following these steps and making the appropriate adjustments, you can reduce the oversharpening effect in your image. Remember to make incremental changes and review the effects to find the optimal configuration for your specific image. |

LLM 480 may be a separate large language model. LLM 480 may be a single modality LLM. LLM 480 may be a multi-modal LLM. LLM 480 may be the same model as analysis multi-modal LLM 208. LLM 480 may share parts of the analysis multi-modal LLM 208. LLM 480 may be finetuned by finetuning 314 of FIG. 3 using labeled data 312 of FIG. 3.

Herein, a prompt used as an input to an LLM, such as prompt 224 of FIGS. 2-3, further prompt 498 of FIG. 4, can include content having one or more modalities.

### An exemplary method for camera tuning

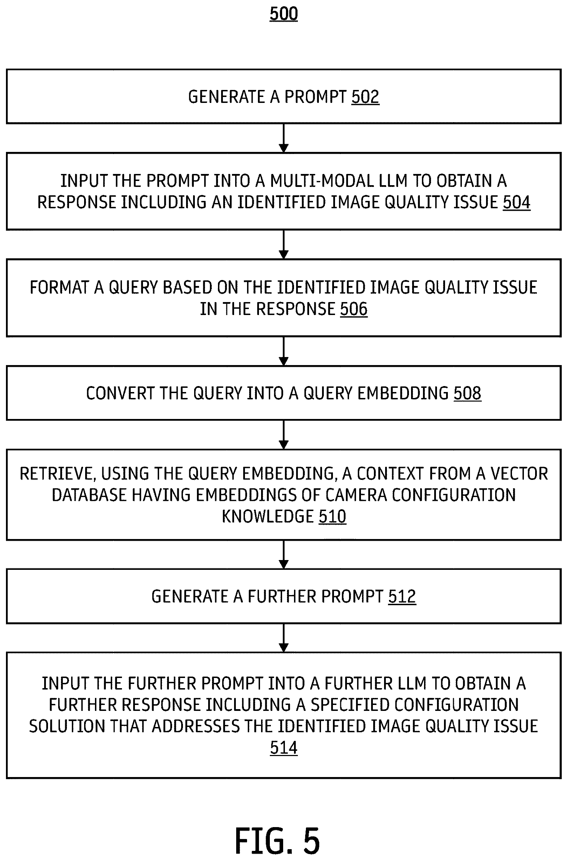

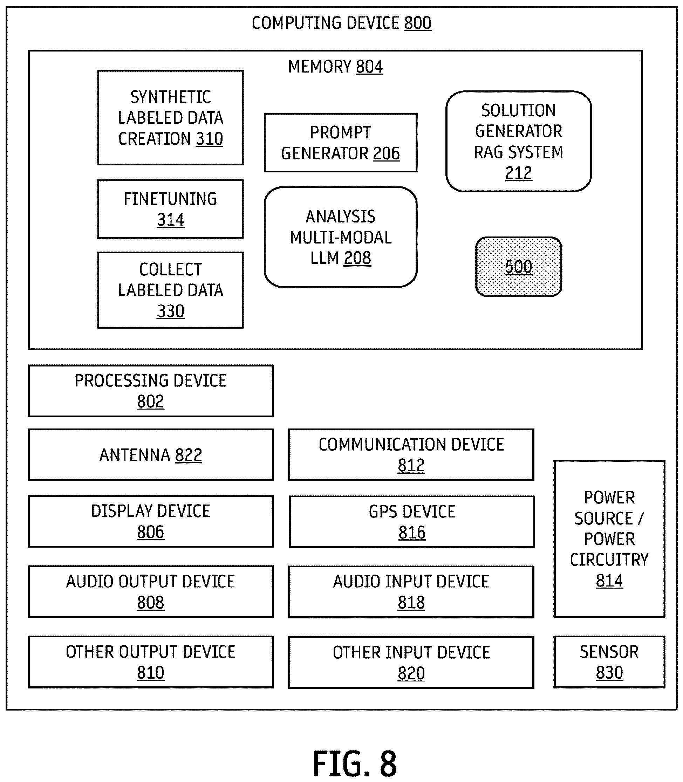

FIG. 5 is a flowchart showing a method for tuning a camera, according to some embodiments of the disclosure. Method 500 may be performed by one or more components illustrated in FIGS. 2-4. Method 500 can be performed using a computing device, such as computing device 800 in FIG. 8.

In 502, a prompt is generated. The prompt may include an image and a task to determine an image quality issue present in the image.

In 504, the prompt is input into a multi-modal LLM to obtain a response including an identified image quality issue.

In 506, a query is formatted based on the identified image quality issue in the response.

In 508, the query is converted into a query embedding.

In 510, using the query embedding, a context is retrieved from a vector database having embeddings of camera configuration knowledge. The context has one or more pieces of the camera configuration knowledge that are relevant to the query.

In 512, a further prompt is generated. The further prompt has the query, the context, and a further task to determine a configuration solution.

In 514, the further prompt is input into a further LLM to obtain a further response including a specified configuration solution that addresses the identified image quality issue.

In some embodiments, alternate operations may be performed, including: generating a prompt having an image and a task to determine an image quality issue present in the image, inputting the prompt into a multi-modal large language model to obtain a response including an identified image quality issue, retrieving, using the identified image quality issue, a context from a vector database having embeddings of camera configuration knowledge, the context having one or more pieces of the camera configuration knowledge that are relevant to the identified image quality issue, generating a further prompt having the identified image quality issue, the context, and a further task to determine a configuration solution, and inputting the further prompt into a further large language model to obtain a further response including a specified configuration solution that addresses the identified image quality issue.

In some embodiments, alternate operations may be performed, including: generating a prompt having an image and a task to determine an image quality issue present in the image, inputting the prompt into a multi-modal large language model to obtain a response including an identified image quality issue, formatting a query based on the identified image quality issue in the response, retrieving, using the query, a context from a vector database having camera configuration knowledge, the context having one or more pieces of the camera configuration knowledge that are relevant to the query, generating a further prompt having the query, the context, and a further task to determine a configuration solution, and inputting the further prompt into a further large language model to obtain a further response including a specified configuration solution that addresses the identified image quality issue.

### Large language models

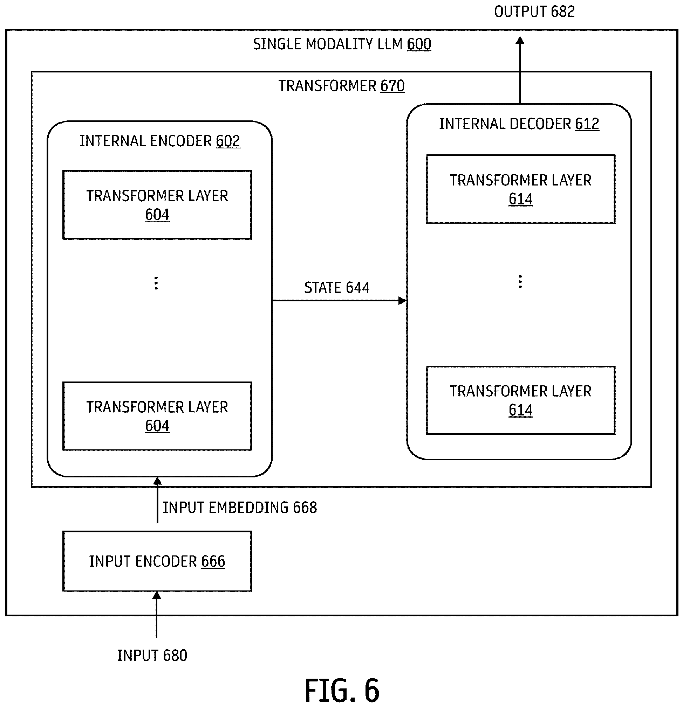

Various parts of the description discuss using an LLM. The description with FIGS. 6-7 illustrates some implementation of LLMs, and details about the transformer-based models.

FIG. 6 illustrates an exemplary implementation of single modality LLM 600, according to some embodiments of the disclosure. Single modality LLM 600 may receive input 680 and generate output 682. Input 680 may have a single modality, e.g., image/visual, text/textual, audio, a sensor signal, etc. Input 680 can include an input sequence, or a sequence of inputs. Single modality LLM 600 may process input 680 through tokenization (not shown explicitly), converting input 680 (e.g., words and sub-words of textual input, patches of image input, clips of audio input, parts of the input sequence, etc.) into numerical tokens, and input encoder 666 can convert the numerical tokens into continuous vector representations, shown as input embedding 668. In some cases, positional encodings may be included by input encoder 666 to capture token order. Input embedding 668 can include semantic information about each token and its context within the input sequence.

Input embedding 668 may be input into transformer 670. Transformer 670 may generate output 682 token by token, with each new token conditioned on both the input sequence and previously generated tokens. Transformer 670 may include internal encoder 602 and internal decoder 612. Each token can flow through the entire encoder-decoder pipeline of transformer 670 before the next token is generated.

Internal encoder 602 and internal decoder 612 include respective transformer layers. A transformer layer may include one or more of: self-attention mechanism, cross-attention mechanism, masked self-attention mechanism, feed-forward neural network, multi-head self-attention mechanism, etc. In some implementations, a transformer layer can include two sub-layers: multi-head attention and a position-wise feed-forward network, each wrapped with residual connections and layer normalization. The multi-head attention splits the input into multiple heads that independently perform scaled dot-product attention using queries, keys, and values, before recombining the results. The feed-forward network can include of two linear transformations with an activation function in between, processing each position's features independently. Layer normalization helps stabilize training by normalizing the features across the embedding dimension, while residual connections allow direct gradient flow and help preserve information through deep networks.

Inside transformer 670, internal encoder 602 can process processes input embedding 668 using self-attention mechanism in the one or more transformer layers 604 to build contextual representations, with each token attending to all other input tokens. These encoded representations are then passed to internal decoder 612 as state 644.

Internal encoder 602 can include one or more transformer layers 604. In some implementations, transformer layer 604 in internal encoder 602 can include a multi-head self-attention mechanism followed by a feed-forward neural network. In self-attention, each token's representation is updated by attending to all other tokens in the input sequence, with attention weights determined by learned key-query-value projections. Multiple attention heads capture different types of relationships between tokens. The feed-forward network then processes these attention-weighted representations through two linear transformations with a nonlinear activation in between, allowing the model to transform the information gathered through attention.

Inside transformer 670, internal decoder 612 can use cross-attention mechanisms in the one or more transformer layers 614 to align each output token with relevant parts of the encoded input (passed from internal encoder 602 to internal decoder 612 as state 644). Internal decoder 612 can include masked self-attention mechanisms in the one or more transformer layers one or more transformer layers 614 to prevent looking ahead at future tokens during generation.

Internal decoder 612 can include one or more transformer layers 614. In some implementations, transformer layer 614 can include three components: masked self-attention, cross-attention, and a feed-forward neural network. Masked self-attention operates like encoder self-attention but prevents tokens from attending to future positions during generation. Cross-attention allows decoder tokens to attend to encoder outputs, with decoder queries attending to encoder keys and values. The cross-attention mechanism can create a bridge between input and output sequences, letting each generated token draw information from relevant input tokens. The feed-forward neural network then processes these combined representations.

This encoder-decoder interaction in transformer 670 allows the model to learn complex relationships between input and output sequences while maintaining proper generation order.

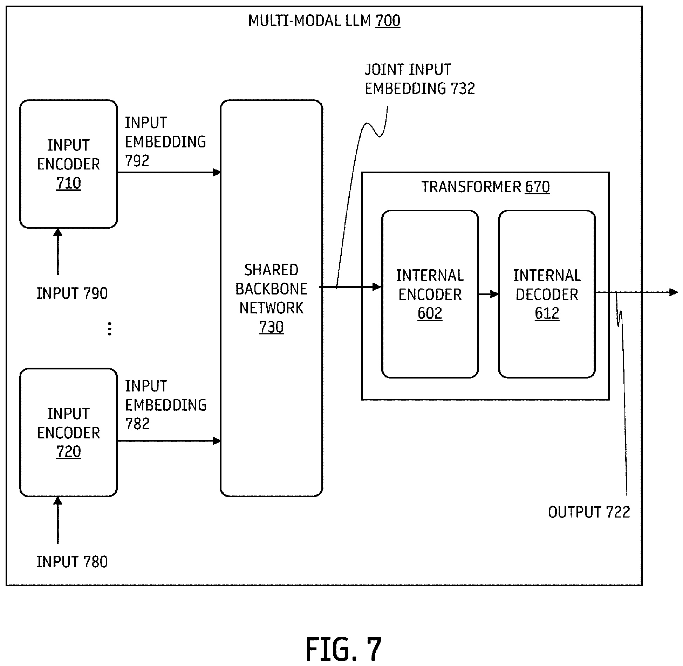

FIG. 7 illustrates an exemplary implementation of multi-modal LLM 700, according to some embodiments of the disclosure. Multi-modal LLM 700 can be different from LLM 600 in that multi-modal LLM 700 receives multiple input with different modalities. As illustrated, multi-modal LLM 700 may receive input 780 and input 790. For example, input 780 may include text input, and input 790 may include image input. It is envisioned that multi-modal LLM 700 may receive input having a combination of modalities described herein. A corresponding input encoder can be provided to process the individual inputs to generate corresponding input embeddings. Input encoder 710 may process input 790 to generate input embedding 792. Input encoder 720 may process input 780 to generate input embedding 782. The input encoders (e.g., input encoder 710 and input encoder 720) can be specialized or implemented differently for each modality. For textual input, the input encoder may use tokenization and embedding layers to produce the input embedding. For image/visual input, vision transformers or convolutional neural networks may be implemented in the input encoder to produce the input embedding. For audio input, specialized audio processing architectures may be implemented in the input encoder to produce the input embedding. Respective input encoders can convert the (raw) inputs into a common embedding space.

In some embodiments, multi-modal LLM 700 includes a shared backbone network 730 to implement modality fusion and produce joint input embedding 732. Shared backbone network 730 can include one or more transformer layers. In some implementations, inputs from different modalities are projected by shared backbone network 730 to have compatible dimensionality and semantic structure. Shared backbone network 730 can use cross-attention mechanisms that can process the input embeddings regardless of their original modality. Shared backbone network 730 can include cross-attention transformer layers, which can extract cross-modal relationships. In one example, shared backbone network 730 can associate visual features with corresponding textual descriptions, while maintaining modality-specific information. Additional projection layers and normalization techniques in shared backbone network 730 can help manage the different statistical properties of embeddings from each modality, ensuring balanced contribution from all input types during joint processing.

Joint input embedding 732 can be provided as input into transformer 670 to finally produce output 722.

It is envisioned by the disclosure that other architectures can be implemented to offer modality fusion. For example, shared backbone network 730 may be omitted, and input embedding 782 and input embedding 792 may be appended together and used as input to transformer 670 (and the internal encoder 602 may implement the role of modality fusion).

### Exemplary computing device

FIG. 8 is a block diagram of an apparatus or a system, e.g., an exemplary computing device 800, according to some embodiments of the disclosure. One or more computing devices 800 may be used to implement the functionalities described with the FIGS. and herein. A number of components are illustrated in FIG. 8. can be included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, and the computing device 800 may include interface circuitry for coupling to the one or more components. For example, the computing device 800 may not include a display device 806, and may include display device interface circuitry (e.g., a connector and driver circuitry) to which a display device 806 may be coupled. In another set of examples, the computing device 800 may not include an audio input device 818 or an audio output device 808 and may include audio input or output device interface circuitry (e.g., connectors and supporting circuitry) to which an audio input device 818 or audio output device 808 may be coupled.

The computing device 800 may include a processing device 802 (e.g., one or more processing devices, one or more of the same types of processing device, one or more of different types of processing device). The processing device 802 may include electronic circuitry that process electronic data from data storage elements (e.g., registers, memory, resistors, capacitors, quantum bit cells) to transform that electronic data into other electronic data that may be stored in registers and/or memory. Examples of processing device 802 may include a CPU, a GPU, a quantum processor, a machine learning processor, an artificial intelligence processor, a neural network processor, an artificial intelligence accelerator, an application-specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 804 includes one or more non-transitory computer-readable storage media. In some embodiments, memory 804 may include memory that shares a die with the processing device 802.

In some embodiments, memory 804 includes one or more non-transitory computer-readable media storing instructions executable to perform operations described with FIGS. 2-7 and herein, such as the method 500 illustrated in FIG. 5.

Memory 804 may store instructions that encode one or more exemplary parts. Exemplary parts, such as one or more parts of analysis stage 280 and one or more parts of solution producing stage 290, may be encoded as instructions and stored in memory 804. Exemplary parts may include one or more of: synthetic labeled data creation 310, finetuning 314, collect labeled data 330, prompt generator 206, analysis multi-modal LLM 208, and one or more components in solution generator RAG system 212. The instructions stored in the one or more non-transitory computer-readable media may be executed by processing device 802.

In some embodiments, memory 804 may store data, e.g., data structures, binary data, bits, metadata, files, blobs, etc., as described with the FIGS. and herein. Exemplary data, such as prompts, queries, contexts, embeddings, vector databases, responses, labeled data, images, text, etc., described herein, may be stored in memory 804.

In some embodiments, memory 804 may store one or more machine learning models (and or parts thereof) that are used in LLMs and encoders described herein. Memory 804 may store training data for training the one or more machine learning models. In one example, memory 804 may store labeled data 312 illustrated in FIG. 3. Memory 804 may store input data, output data, intermediate outputs, intermediate inputs of one or more machine learning models. Memory 804 may store instructions to perform one or more operations of the machine learning model. Memory 804 may store one or more parameters used by the machine learning model. Memory 804 may store information that encodes how processing units of the machine learning model are connected with each other.

In some embodiments, the computing device 800 may include a communication device 812 (e.g., one or more communication devices). For example, the communication device 812 may be configured for managing wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 812 may operate in accordance with other wireless protocols in other embodiments. The computing device 800 may include an antenna 822 to facilitate wireless communications and/or to receive other wireless communications (such as radio frequency transmissions). The computing device 800 may include receiver circuits and/or transmitter circuits. In some embodiments, the communication device 812 may manage wired communications, such as electrical, optical, or any other suitable communication protocols (e.g., the Ethernet). As noted above, communication device 812 may include multiple communication chips. For instance, a first communication device 812 may be dedicated to shorter-range wireless communications such as Wi-Fi or Bluetooth, and a second communication device 812 may be dedicated to longer-range wireless communications such as global positioning system (GPS), EDGE, GPRS, CDMA, WiMAX, LTE, EV-DO, or others. In some embodiments, a first communication device 812 may be dedicated to wireless communications, and a second communication device 812 may be dedicated to wired communications.

The computing device 800 may include power source / power circuitry 814. The power source / power circuitry 814 may include one or more energy storage devices (e.g., batteries or capacitors) and/or circuitry for coupling components of the computing device 800 to an energy source separate from the computing device 800 (e.g., DC power, AC power, etc.).

The computing device 800 may include a display device 806 (or corresponding interface circuitry, as discussed above). Display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include a sensor 830 (or one or more sensors). The computing device 800 may include corresponding interface circuitry, as discussed above). Sensor 830 may sense physical phenomenon and translate the physical phenomenon into electrical signals that can be processed by, e.g., processing device 802. Examples of sensor 830 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 800 may include another output device 810 (or corresponding interface circuitry, as discussed above). Examples of the other output device 810 may include an audio codec, a video codec, a printer, a wired or wireless transmitter for providing information to other devices, haptic output device, gas output device, vibrational output device, lighting output device, home automation controller, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile Internet device, a music player, a tablet computer, a laptop computer, a netbook computer, a personal digital assistant (PDA), a personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 800 may be any other electronic device that processes data.

### Select examples

Example 1 provides a method, including generating a prompt having an image and a task to determine an image quality issue present in the image; inputting the prompt into a multi-modal large language model to obtain a response including an identified image quality issue; formatting a query based on the identified image quality issue in the response; converting the query into a query embedding; retrieving, using the query embedding, a context from a vector database having embeddings of camera configuration knowledge, the context having one or more pieces of the camera configuration knowledge that are relevant to the query; generating a further prompt having the query, the context, and a further task to determine a configuration solution; and inputting the further prompt into a further large language model to obtain a further response including a specified configuration solution that addresses the identified image quality issue.

Example 2 provides the method of example 1, where the prompt further includes a role of the multi-modal large language model specifying that the multi-modal large language model is an expert image quality engineer.

Example 3 provides the method of example 1 or 2, where the task includes one or more types of possible image quality issues.

Example 4 provides the method of any one of examples 1-3, where the task includes one or more characteristics of possible image quality issues.

Example 5 provides the method of example 3 or 4, where the possible image quality issues include a lighting condition, exposure, color balance, tone mapping, sharpness, and image noise.

Example 6 provides the method of any one of examples 1-5, where the task includes an instruction to compare the image and a reference target image.

Example 7 provides the method of any one of examples 1-6, where the task includes one or more of an aesthetic preference and an image quality standard.

Example 8 provides the method of any one of examples 1-7, where formatting the query based on the identified image quality issue includes rephrasing the identified image quality issue into a question.

Example 9 provides the method of any one of examples 1-8, where formatting the query based on the identified image quality issue includes appending one or more of an aesthetic preference and an image quality standard to the identified image quality issue.

Example 10 provides the method of any one of examples 1-9, where retrieving the context from the vector database includes retrieving a number of embeddings of the camera configuration knowledge that match most closely to the query embedding.

Example 11 provides the method of any one of examples 1-10, where the camera configuration knowledge includes one or more of: a camera parameter name, a camera parameter value range of the camera parameter name, a camera functionality, an image processing algorithm specification, an image quality tool method, a camera manual, a register configuration, and firmware configuration code.

Example 12 provides the method of any one of examples 1-11, where the further prompt further includes a role of the multi-modal large language model specifying that the multi-modal large language model is an expert image processing engineer.

Example 13 provides the method of any one of examples 1-12, where the further task includes an instruction to determine the configuration solution for a block in an image processing pipeline.

Example 14 provides the method of any one of examples 1-13, where the further task includes an instruction to output the configuration solution in a form of one or more operations.

Example 15 provides the method of any one of examples 1-14, where the further task includes an instruction to output the configuration solution in a form of one or more register values and one or more register addresses to write the one or more register values.

Example 16 provides the method of any one of examples 1-15, where the further task includes an instruction to output the configuration solution in a form of one or more application programming interface function calls.

Example 17 provides one or more non-transitory computer-readable media storing instructions that, when executed by one or more processors, cause the one or more processors to: generate a prompt having an image and a task to determine an image quality issue present in the image; input the prompt into a multi-modal large language model to obtain a response including an identified image quality issue; format a query based on the identified image quality issue in the response; convert the query into a query embedding; retrieve, using the query embedding, a context from a vector database having embeddings of camera configuration knowledge, the context having one or more pieces of the camera configuration knowledge that are relevant to the query; generate a further prompt having the query, the context, and a further task to determine a configuration solution; and input the further prompt into a further large language model to obtain a further response including a specified configuration solution that addresses the identified image quality issue.

Example 18 provides the one or more non-transitory computer-readable media of example 17, where the prompt further includes a role of the multi-modal large language model specifying that the multi-modal large language model is an expert image quality engineer.

Example 19 provides the one or more non-transitory computer-readable media of example 17 or 18, where the task includes one or more types of possible image quality issues.

Example 20 provides the one or more non-transitory computer-readable media of any one of examples 17-19, where the task includes one or more characteristics of possible image quality issues.

Example 21 provides the one or more non-transitory computer-readable media of example 19 or 20, where the possible image quality issues include a lighting condition, exposure, color balance, tone mapping, sharpness, and image noise.

Example 22 provides the one or more non-transitory computer-readable media of any one of examples 17-21, where the task includes an instruction to compare the image and a reference target image.

Example 23 provides the one or more non-transitory computer-readable media of any one of examples 17-22, where the task includes one or more of an aesthetic preference and an image quality standard.

Example 24 provides the one or more non-transitory computer-readable media of any one of examples 17-23, where formatting the query based on the identified image quality issue includes rephrasing the identified image quality issue into a question.

Example 25 provides the one or more non-transitory computer-readable media of any one of examples 17-24, where formatting the query based on the identified image quality issue includes appending one or more of an aesthetic preference and an image quality standard to the identified image quality issue.

Example 26 provides the one or more non-transitory computer-readable media of any one of examples 17-25, where retrieving the context from the vector database includes retrieving a number of embeddings of the camera configuration knowledge that match most closely to the query embedding.

Example 27 provides the one or more non-transitory computer-readable media of any one of examples 17-26, where the camera configuration knowledge includes one or more of: a camera parameter name, a camera parameter value range of the camera parameter name, a camera functionality, an image processing algorithm specification, an image quality tool method, a camera manual, a register configuration, and firmware configuration code.

Example 28 provides the one or more non-transitory computer-readable media of any one of examples 17-27, where the further prompt further includes a role of the multi-modal large language model specifying that the multi-modal large language model is an expert image processing engineer.

Example 29 provides the one or more non-transitory computer-readable media of any one of examples 17-28, where the further task includes an instruction to determine the configuration solution for a block in an image processing pipeline.

Example 30 provides the one or more non-transitory computer-readable media of any one of examples 17-29, where the further task includes an instruction to output the configuration solution in a form of one or more operations.

Example 31 provides the one or more non-transitory computer-readable media of any one of examples 17-30, where the further task includes an instruction to output the configuration solution in a form of one or more register values and one or more register addresses to write the one or more register values.

Example 32 provides the one or more non-transitory computer-readable media of any one of examples 17-31, where the further task includes an instruction to output the configuration solution in a form of one or more application programming interface function calls.

Example 33 provides an apparatus, including one or more processors; and one or more non-transitory computer-readable media storing instructions that, when executed by the one or more processors, cause the one or more processors to: generate a prompt having an image and a task to determine an image quality issue present in the image; input the prompt into a multi-modal large language model to obtain a response including an identified image quality issue; format a query based on the identified image quality issue in the response; convert the query into a query embedding; retrieve, using the query embedding, a context from a vector database having embeddings of camera configuration knowledge, the context having one or more pieces of the camera configuration knowledge that are relevant to the query; generate a further prompt having the query, the context, and a further task to determine a configuration solution; and input the further prompt into a further large language model to obtain a further response including a specified configuration solution that addresses the identified image quality issue.

Example 34 provides the apparatus of example 33, where the prompt further includes a role of the multi-modal large language model specifying that the multi-modal large language model is an expert image quality engineer.

Example 35 provides the apparatus of example 33 or 34, where the task includes one or more types of possible image quality issues.

Example 36 provides the apparatus of any one of examples 33-35, where the task includes one or more characteristics of possible image quality issues.

Example 37 provides the apparatus of example 35 or 36, where the possible image quality issues include a lighting condition, exposure, color balance, tone mapping, sharpness, and image noise.

Example 38 provides the apparatus of any one of examples 33-37, where the task includes an instruction to compare the image and a reference target image.

Example 39 provides the apparatus of any one of examples 33-38, where the task includes one or more of an aesthetic preference and an image quality standard.

Example 40 provides the apparatus of any one of examples 33-39, where formatting the query based on the identified image quality issue includes rephrasing the identified image quality issue into a question.

Example 41 provides the apparatus of any one of examples 33-40, where formatting the query based on the identified image quality issue includes appending one or more of an aesthetic preference and an image quality standard to the identified image quality issue.

Example 42 provides the apparatus of any one of examples 33-41, where retrieving the context from the vector database includes retrieving a number of embeddings of the camera configuration knowledge that match most closely to the query embedding.

Example 43 provides the apparatus of any one of examples 33-42, where the camera configuration knowledge includes one or more of: a camera parameter name, a camera parameter value range of the camera parameter name, a camera functionality, an image processing algorithm specification, an image quality tool method, a camera manual, a register configuration, and firmware configuration code.

Example 44 provides the apparatus of any one of examples 33-43, where the further prompt further includes a role of the multi-modal large language model specifying that the multi-modal large language model is an expert image processing engineer.

Example 45 provides the apparatus of any one of examples 33-44, where the further task includes an instruction to determine the configuration solution for a block in an image processing pipeline.

Example 46 provides the apparatus of any one of examples 33-45, where the further task includes an instruction to output the configuration solution in a form of one or more operations.

Example 47 provides the apparatus of any one of examples 33-46, where the further task includes an instruction to output the configuration solution in a form of one or more register values and one or more register addresses to write the one or more register values.

Example 48 provides the apparatus of any one of examples 33-47, where the further task includes an instruction to output the configuration solution in a form of one or more application programming interface function calls.

Example A provides an apparatus comprising means to carry out or means for carrying out any one of the methods provided in examples 1-16 and methods/processes described herein.

Example B provides an analysis stage and a solution producing stage as described herein.

Example C provides an analysis stage as described herein.

Example D provides a solution producing stage as described herein.

### Variations and other notes

Although the operations of the example method shown in and described with reference to FIGS. 2-7 are illustrated as occurring once each and in a particular order, it will be recognized that the operations may be performed in any suitable order and repeated as desired. Additionally, one or more operations may be performed in parallel. Furthermore, the operations illustrated in FIGS. 2-7 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
generating a prompt having an image and a task to determine an image quality issue present in the image;
inputting the prompt into a multi-modal large language model to obtain a response including an identified image quality issue;
formatting a query based on the identified image quality issue in the response;
converting the query into a query embedding;
retrieving, using the query embedding, a context from a vector database having embeddings of camera configuration knowledge, the context having one or more pieces of the camera configuration knowledge that are relevant to the query;
generating a further prompt having the query, the context, and a further task to determine a configuration solution; and
inputting the further prompt into a further large language model to obtain a further response including a specified configuration solution that addresses the identified image quality issue.

2. The method of claim 1, wherein the prompt further includes a role of the multi-modal large language model specifying that the multi-modal large language model is an expert image quality engineer.

3. The method of claim 1 or 2, wherein the task includes one or more types of possible image quality issues.

4. The method of any one of claims 1-3, wherein the task includes one or more characteristics of possible image quality issues.

5. The method of claim 3 or 4, wherein the possible image quality issues include a lighting condition, exposure, color balance, tone mapping, sharpness, and image noise.

6. The method of any one of claims 1-5, wherein the task includes an instruction to compare the image and a reference target image.

7. The method of any one of claims 1-6, wherein the task includes one or more of an aesthetic preference and an image quality standard.

8. The method of any one of claims 1-7, wherein formatting the query based on the identified image quality issue comprises:
rephrasing the identified image quality issue into a question.

9. The method of any one of claims 1-8, wherein formatting the query based on the identified image quality issue comprises:
appending one or more of an aesthetic preference and an image quality standard to the identified image quality issue.

10. The method ofany one of claims 1-9, wherein retrieving the context from the vector database comprises:
retrieving a number of embeddings of the camera configuration knowledge that match most closely to the query embedding.

11. The method of any one of claims 1-10, wherein the camera configuration knowledge includes one or more of: a camera parameter name, a camera parameter value range of the camera parameter name, a camera functionality, an image processing algorithm specification, an image quality tool method, a camera manual, a register configuration, and firmware configuration code.

12. The method of any one of claims 1-11, wherein the further prompt further includes a role of the multi-modal large language model specifying that the multi-modal large language model is an expert image processing engineer.

13. The method of any one of claims 1-12, wherein the further task includes one or more of:
an instruction to determine the configuration solution for a block in an image processing pipeline;
an instruction to output the configuration solution in a form of one or more operations;
an instruction to output the configuration solution in a form of one or more register values and one or more register addresses to write the one or more register values; and
an instruction to output the configuration solution in a form of one or more application programming interface function calls.

14. One or more non-transitory computer-readable media storing instructions that, when executed by one or more processors, cause the one or more processors to perform a method according to any one of claims 1-13.

15. An apparatus comprising means to perform a method according to any one of claims 1-13.
